# EUROPEAN PATENT APPLICATION

(11) **EP 4 435 050 A1**
(43) Date of publication of application: **25.09.2024**
(21) Application number: 22895312.1
(22) Date of filing: 18.10.2022
(51) Int. Cl.: C08L 63/00, C08G 59/66, C08K 5/17, C08K 5/37, C09J 11/00, C09J 11/06, C09J 133/04, C09J 163/00, C09J 201/00, F16B 39/02

(54) **MICROCAPSULE TYPE CURABLE RESIN COMPOSITION**

(30) Priority: 17.11.2021 JP 2021187226
(71) Applicant: ThreeBond Co., Ltd., Tokyo 192-0398 (JP)
(72) Inventor: SOGA, Tetsunori, Hachioji-shi, Tokyo 192-0398 (JP)
(74) Representative: Haseltine Lake Kempner LLP
(86) International application number: PCT/JP2022/038682
(87) International publication number: WO 2023/090026

(57) **Abstract**

The present invention provides a microcapsule-type curable resin composition to be applied to a screwing member, capable of reducing the generation of crumbs when the screwing member is screwed into a base material, having excellent anti-loosening effect. Further, the present invention provides a method for producing a screwing member, including applying the microcapsule-type curable resin composition to a surface of a screwing member, and drying the composition to form a precoated adhesive layer. Further, the present invention provides a screwing member having a precoated adhesive layer formed by applying the microcapsule-type curable resin composition to the surface of the screwing member and drying the composition.

The present invention relates to a microcapsule-type curable resin composition containing the following components (A) to (D) :
Component (A): an epoxy resin
Component (B): a water-dispersible binder
Component (C): a curing agent for an epoxy resin
Component (D): a hollow filler.

## Description

### TECHNICAL FIELD

The present invention relates to a microcapsule-type curable resin composition.

### BACKGROUND ART

Conventionally, microcapsule-type adhesives for adhering screwing members such as screws, bolts, nuts, and small male screws are widely known. Examples thereof include a microcapsule-type adhesive for fixing screwing members containing a microcapsule formed by using an epoxy resin as a core material, a binder containing a polyvinyl butyral resin, and an imidazole curing agent having a long-chain alkyl group (refer to Japanese Patent Laid-Open No. 09-241351), a microcapsule-type adhesive for anti-loosening screws containing a microcapsule formed by using an epoxy resin as a core material and a reactive diluent, and an emulsion including a curing agent and a polyamide resin as a binder resin (refer to Japanese Patent Laid-Open No. 2003-194032), and a microcapsule-type adhesive for anti-loosening screws containing a microcapsule formed by using an organic peroxide as core material, a binder containing polyvinyl alcohol, and a (meth)acrylate monomer (refer to Japanese Patent Laid-Open No. 08-143822). Among these, an adhesive using an epoxy resin, in particular, is preferably used due to high anti-loosening effect resulting from high adhesion strength as resin properties.

### SUMMARY OF INVENTION

However, in the case where an adhesive using an epoxy resin is applied to a screwed portion of a screwing member such as a bolt and a nut, during screwing, a dried film of the adhesive tends to generate crumbs more easily due to rigid characteristics of the epoxy resin in comparison with an acrylate resin or the like. Accordingly, there is a problem that the crumbs scatter and adhere to the peripheral portion. For example, in the case of application to electronic parts, scattering of the crumbs causes malfunction of machinery such as sliding parts and precision parts, generation of noise, and poor conduction of switches or the like.

The present invention has been made in view of the situation, and an object of the present invention is to provide a microcapsule-type curable resin composition applicable to a screwed portion of a screwing member, capable of reducing the generation of crumbs when the screwing member is screwed into a base material.

Another object of the present invention is to provide a method for producing a screwing member, including applying the microcapsule-type curable resin composition to a surface of a screwed portion of a screwing member, and drying the composition to form an adhesive layer.

Further, the present invention provides a screwing member having the adhesive layer.

The gist of the present invention is described as follows.
[1] A microcapsule-type curable resin composition containing the following components (A) to (D).
   Component (A): an epoxy resin
   Component (B): a water-dispersible binder
   Component (C): a curing agent for an epoxy resin
   Component (D): a hollow filler.
[2] The microcapsule-type curable resin composition according to item [1], wherein the component (C) contains at least one thiol compound.
[3] The microcapsule-type curable resin composition according to item [1] or [2], wherein the component (A) and the component (C) are encapsulated in microcapsules different from each other.
[4] The microcapsule-type curable resin composition according to any one of items [1] to [3], further containing a curing accelerator as component (E).
[5] The microcapsule-type curable resin composition according to item [4], wherein the component (E) is a tertiary amine compound.
[6] The microcapsule-type curable resin composition according to any one of items [1] to [5], wherein the component (D) is not treated with a silane coupling agent.
[7] The microcapsule-type curable resin composition according to any one of items [1] to [6], wherein the component (B) is a polymer containing a (meth)acrylate as a constituent monomer.
[8] The microcapsule-type curable resin composition according to any one of items [1] to [7], containing no dissolution medium other than water.
[9] A method for producing a screwing member, comprising applying the microcapsule-type curable resin composition according to any one of items [1] to [8] to a surface of a screwed portion of a screwing member, and drying the composition to form an adhesive layer.
[10] A screwing member produced by the production method according to item [9].

### DESCRIPTION OF EMBODIMENTS

The details of the present invention is described as follows. In the present specification, "X to Y" is used to include the pre-positioned and post-positioned numerical values (X and Y) as lower and upper limits, and means "X or more and Y or less".

In the present specification, an adhesive layer formed by applying the microcapsule-type curable resin composition according to the present invention to a surface of a screwed portion of a screwing member and drying the composition is also referred to as a precoated adhesive layer, and a screwing member having the precoated adhesive layer is also referred to as a precoated bolt.

In the present specification, the term "(meth)acrylic" means acrylic and/or methacrylic. In the same manner, the term "(meth)acrylate" means acrylate and/or methacrylate.

The present invention relates to a microcapsule-type curable resin composition containing the following components (A) to (D) :
Component (A): an epoxy resin
Component (B): a water-dispersible binder
Component (C): a curing agent for an epoxy resin
Component (D): a hollow filler.

The microcapsule-type curable resin composition having such a constitution according to the present invention, when being applied to a screwed portion of a screwing member, is capable of reducing the generation of crumbs when the screwing member is screwed into a base material.

The present invention is described in detail as follows.

### [Component (A)]

The component (A) usable in the present invention is an epoxy resin.

The component (A) is not particularly limited and may be a solid or a liquid as long as it is a compound having one or more epoxy groups. However, from the viewpoint of increasing the number of contact points and facilitating a reaction with a curing component when a screwing member is screwed into a base material, a liquid is preferred, and an epoxy resin having a viscosity of 1.0 to 50,000 mPa·s is particularly preferred. In the case where two or more epoxy resins are used, an epoxy resin having a viscosity of more than 50,000 mPa·s diluted with a diluent may be used. The term viscosity here is a measured value according to the viscosity measurement method specified in JIS K 7117-2: 1999 (BL type viscometer, 60 rpm, measurement for 60 seconds, rotor No. 2, 25°C and 55% RH). Specific examples of the component (A) include a bisphenol-type epoxy resin such as a bisphenol A-type epoxy resin, a bisphenol F-type epoxy resin, a bisphenol S-type epoxy resin, and a bisphenol AD-type epoxy resin; a hydrogenated bisphenol-type epoxy resin; an alkylene glycol-type epoxy resin such as 1,2-butanediol diglycidyl ether, 1,3-butanediol diglycidyl ether, 1,4-butanediol diglycidyl ether, ethylene glycol diglycidyl ether, propylene glycol diglycidyl ether, 2,3-butanediol diglycidyl ether, 1,5-pentanediol diglycidyl ether, 1,6-hexanediol diglycidyl ether, neopentyl glycol diglycidyl ether, and 1,4-cyclohexanedimethanol diglycidyl ether; a novolac-type epoxy resin such as a phenol novolac-type epoxy resin and a cresol novolac-type epoxy resin; a glycidylamine compound such as N,N-diglycidyl-4-glycidyloxyaniline, 4,4'-methylenebis(N,N-diglycidylaniline), tetraglycidylaminodiphenylmethane, and tetraglycidyl-m-xylylenediamine; and a naphthalene-type epoxy resin having four glycidyl groups. These components (A) may be used singly or in combination of two or more as a mixture.

The component (A) usable in the present invention is preferably a compound having two or more epoxy groups, more preferably a bisphenol-type epoxy resin, particularly preferably at least one of a bisphenol A-type epoxy resin and a bisphenol F-type resin, from the viewpoint of excellence in fixing strength when a precoated bolt is screwed into a base material. Further, it is preferable that the bisphenol-type epoxy resin have an epoxy equivalent (g/eq) of 120 to 300.

The commercially available product of the component (A) is not particularly limited, and examples thereof include jER (registered trademark) 828, 1001, 801, 806, 807, 152, 604, 630, 871, YX8000, YX8034 and YX4000 (all of the above: manufactured by Mitsubishi Chemical Corporation), EPICLON (registered trademark) 830, 850, 830LVP, 850CRP, 835LV, HP4032D, 703, 720, 726 and 820 (all of the above: manufactured by DIC Corporation), ADEKARESIN (registered trademark) EP4100, EP4000, EP4080, EP4085, EP4088, EPU6, EPU7N, EPR4023, EPR1309 and EP4920 (all of the above: manufactured by ADEKA Corporation), TEPIC (registered trademark) (manufactured by Nissan Chemical Corporation), KF-101, KF-1001, KF-105, X-22-163B and X-22-9002 (all of the above: manufactured by Shin-Etsu Chemical Co., Ltd.), DENACOL (registered trademark) EX411, 314, 201, 212 and 252 (all of the above: manufactured by Nagase ChemteX Corporation), DER-331, 332, 334, 431 and 542 (all of the above: manufactured by Dow Chemical Company), and YH-434 and YH-434L (manufactured by NIPPON STEEL Chemical & Material Co., Ltd.). These commercial products may be used singly or in combination of two or more as a mixture.

The component (A) may be encapsulated in a microcapsule, and in that case, preferably encapsulated in a microcapsule different from the microcapsule for a component (C), which will be described later. Thereby, direct contact between the components (A) and (C) can be avoided, so that the storage stability of the microcapsule-type curable resin composition can be ensured. A conventionally known material may be used as the material constituting a microcapsule wall (hereinafter also referred to as "microcapsule wall material"). For example, gelatin, an aldehyde resin, or a urea resin may be used. Examples of the aldehyde resin include a ureaformaldehyde resin and a melamine-formaldehyde resin, and examples of the urea resin include a polyurea resin and a polyurethane resin. An average particle diameter of the microcapsule may be adjusted to a desired value by controlling the stirring speed, stirring time, and the like. In the present invention, the average particle diameter of the microcapsule is preferably 20 to 120 µm, more preferably 30 to 100 µm. With an average particle diameter of the microcapsule in the range, the amount of crumbs generated when screwing a screwing member into a base material is suppressed, and the reactive components react with each other easily when tightening a precoated bolt, so that high fixing strength can be obtained.

The average particle diameter of microcapsules is obtained as follows. That is, arbitrarily extracted microcapsules are photographed with a scanning electron microscope, and the particle diameters are measured. This was performed for 100 microcapsules, and the average value was taken as the average particle diameter of the microcapsules. With an average particle diameter in the range, good stability of the microcapsules themselves is achieved, and the effect of the present invention such as the effect of reducing the generation of crumbs can be increased.

A mass ratio between the component (A) and the material constituting the microcapsule wall is preferably Component (A):Microcapsule wall material = 95:5 to 30:70, more preferably 90:10 to 40:60, and still more preferably 90:10 to 50:50. With a mass ratio in the range, the microcapsule wall has an appropriate thickness, and effects of stabilizing the microcapsule itself and sufficiently destroying the microcapsule during screwing can be obtained.

The component (A) may be microencapsulated using a known microencapsulation method such as an interfacial polymerization method, an in-situ method, an insolubilization/precipitation method, and a coacervation method. For example, production may be performed by the method described in Japanese Patent Laid-Open No. 2000-15087.

### [Component (B)]

The component (B) usable in the present invention is a water-dispersible binder. The water-dispersible binder is not particularly limited as long as it is a binder that allows a solid content such as microcapsules, a hollow filler and a filling agent contained in the composition of the present invention to adhere to a screwed portion and disperses without dissolving in water, and examples thereof include those generally having stickiness. Specific examples include a (meth)acrylic-based resin, a urethane-based resin, a butadiene-based resin, and a vinyl acetate-based resin. The component (B) is preferably a (meth)acrylic resin because of excellence in adhesion. The (meth)acrylic resin is a polymer containing an (meth)acrylate as a constituent monomer, and examples thereof include a (meth)acrylate homopolymer obtained by homopolymerizing a (meth)acrylate monomer, and a (meth)acrylate copolymer obtained by copolymerizing a (meth)acrylate monomer with vinyl acetate, styrene, acrylonitrile, (meth)acrylic acid, or the like.

These components (B) may be used singly or in combination of two or more as a mixture. As the component (B), a commercial product or a synthetic product may be used.

Examples of the commercially available product of the component (B) generally include an emulsion or a dispersion dispersed in water. Specific examples thereof include New Coat KSB-1 (manufactured by Shin-Nakamura Chemical Co., Ltd.), Polysol (registered trademark) AP-3160A (manufactured by Showa Denko K.K.), JSR0589 (manufactured by JSR Corporation), and Sumikaflex (registered Trademark) 410HQ (manufactured by Sumika Chemtex Co., Ltd.), though not limited thereto. In the present invention, water contained in these components (B) is regarded as water of other components described later.

The content of the component (B) in the composition is preferably 1 to 50 parts by mass, more preferably 5 to 30 parts by mass, and still more preferably 10 to 25 parts by mass, relative to 100 parts by mass of the component (A). With a content of the component (B) in the range, the solid content in the composition adheres to the screwed portion and the amount of crumbs generated when screwing a precoated bolt into a base material is suppressed. In the case of using two or more types of components (B), the content means the total amount thereof.

### [Component (C)]

Component (C) usable in the present invention is a curing agent for an epoxy resin. The curing agent for an epoxy resin is not particularly limited as long as it reacts with the component (A) and cures it.

Specific examples of the component (C) include an amine compound, an imidazole compound, dicyandiamide, a hydrazide compound, a boron trifluoride-amine complex, a thiol compound and an acid anhydride, and the amine compound and the thiol compound are preferred.

Examples of the amine compound include imidazole, 1,3-bis-4-piperidylpropane, 1,6-hexanediamine, methylenedianiline, a substituted alkyl resin amine, a non-volatile amine such as a liquid polyamide of a dimerized unsaturated fatty acid reacted with an alkyl resin amine (e.g. Versamid (registered trademark) 125), a non-volatile solid amine salt obtained by reacting a volatile liquid amine with an acid, an amine adduct compound, and a water-insoluble polyamide resin.

The thiol compound is preferably a compound having three or more thiol groups from the viewpoint of excellence in fixing strength, and examples thereof include an aliphatic polythiol compound, an aromatic polythiol compound, and a heterocyclic polythiol compound. The number of thiol groups is preferably 3 to 5, more preferably 3 or 4, and still more preferably 4. Examples of the aliphatic polythiol compound include pentaerythritol tetrakis(3-mercaptobutyrate), pentaerythritol tetrakis(3-mercaptopropionate), and trimethylolethane tris(3-mercaptobutyrate). Examples of the aromatic polythiol compound include 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, and 1,3,5-tris(mercaptoethyl)benzene. Examples of the heterocyclic polythiol compound include 1,3,5-tris(3-mercaptobutyloxyethyl)-1,3,5-triazine-2,4,6(1H,3H,5H)-trione.

These components (C) may be used singly or in combination of two or more as a mixture. As the component (C), a commercial product may be used, or a synthetic product may be used.

The component (C) may be encapsulated in a microcapsule, and in that case, it is preferable that the component (C) be encapsulated in a microcapsule different from that for the component (A). Encapsulating the component (A) and component (C) in separate microcapsules, respectively, allows the storage stability of the composition to be further enhanced. The method for producing microcapsules that encapsulates the component (C), the material that constitutes the microcapsule wall, the particle diameter of the microcapsule, and the mass ratio between the component (C) and the material that constitutes the microcapsule wall, etc. are the same as in the case of the component (A) described above.

In the case of using two or more components (C), the components may be encapsulated in microcapsules different from each other or may be encapsulated in the same microcapsule. From the viewpoint of further reducing crumbs, it is preferable that components be encapsulated in the same microcapsule.

The content of component (C) in the composition is preferably 1 to 200 parts by mass, more preferably 10 to 150 parts by mass, and still more preferably 20 to 100 parts by mass, relative to 100 parts by mass of the component (A). With a content of the component (C) in the range, the number of contact points with the component (A) increases, so that the reaction between reaction components occurs easily when a precoated bolt is screwed into a base material, resulting in a high fixing strength. In the case of using two or more types of components (C), the content means the total amount thereof.

### [Component (D)]

The component (D) usable in the present invention is a hollow filler. The hollow filler is a filler having a hollow structure, and also referred to as a microballoon. Although the reason why the effect of the present invention is obtained with use of the component (D) is not clear, the reason is presumed as follows. Since the hollow filler has an internal space, the hollow filer is destroyed when a precoated bolt is screwed into a base material, and the solid content enters the internal space, so that the amount of crumbs generated is presumed to be reduced. It is also presumed that the destroyed hollow filler promotes the engagement between the screwing member and the base material, resulting in a high fixing strength. The material of the component (D) is not particularly limited and may be any of an inorganic material or an organic material as long as the filler has a hollow structure. Examples of the inorganic material include glass, silica, and ceramics, and examples of the organic material include an acrylic-based resin, polyacrylonitrile, a styrene resin, and a urethane resin.

These components (D) may be used singly or in combination of two or more as a mixture. As the component (D), a commercial product or a synthetic product may be used.

The surface of the component (D) may or may not be treated with a surface treatment agent such as a silane coupling agent. From the viewpoint of dispersibility into the composition, it is preferable that no treatment with a silane coupling agent be performed.

The component (D) has an average particle diameter of preferably 0.01 µm or more and less than 150 µm, more preferably 0.1 µm or more and 100 µm or less, and particularly preferably 1 µm or more and 70 µm or less, from the viewpoint of suppressing the amount of crumbs generated. The average particle diameter is a particle diameter (D50) at a cumulative ratio of 50% in the particle size distribution determined by the laser diffraction scattering method.

The commercially available product of the component (D) is not particularly limited, and examples of the hollow filler made of an inorganic material include a glass filler such as 3M glass bubbles K1, K20, S22, S38, iM16K and iM30K (all of the above: manufactured by 3M Japan Ltd.), and Q-CEL (registered trademark) 5020, 5020FPS and 7040S (all of the above: manufactured by Potters-Barrotini Co., Ltd.), and a ceramic filler such as Kainospheres 75 and 150 (manufactured by KANSAI MATEK Co., Ltd.) and E-SPHERES (registered trademark) SL75 (manufactured by Taiheiyo Cement Corporation). Examples of the hollow filler made of an organic material include an acrylic-based copolymer such as EMC-40(B) and EMC-80(B) (manufactured by Japan Fillite Co., Ltd.).

The content of the component (D) in the composition is preferably 0.1 to 15 mass%, more preferably 0.3 to 10 mass%, still more preferably 0.5 to 8 mass%, relative to the total solid content of the composition. With a content of the component (D) in the range, the amount of crumbs generated is suppressed when a precoated bolt is screwed into a base material, and a high fixing strength can be obtained. Here, the total solid content of the composition corresponds to the non-volatile content excluding water and solvent in the composition. In the case of using two or more types of components (D), the content means the total amount thereof.

To the microcapsule-type curable resin composition of the present invention, a curing accelerator as component (E) may be added in addition to the components described above. The component (E) is not particularly limited as long as it promotes the reaction between the component (A) and the component (C), and is preferably an amine compound different from the component (A), more preferably a tertiary amine compound. Examples of the tertiary amine compound include triethylenediamine, benzyldimethylamine, 2-(dimethylaminomethyl)phenol, and 2,4,6-tris(dimethylaminomethyl)phenol. These components (E) may be used singly or in combination of two or more as a mixture. As the component (E), a commercial product may be used, or a synthetic product may be used.

The microcapsule-type curable resin composition of the present invention may contain various additives as optional components in addition to the components described above on an as-needed basis, within a range not impairing the effect of the present invention. Examples of the additive include a filling agent, an organic or inorganic pigment, a rust preventive, an antifoaming agent, a dispersant, a surfactant, a viscoelasticity modifier, a thickener, water, and a solvent.

Examples of the filling agent include silica, talc, calcium carbonate, diatomaceous earth, mica, polytetrafluoroethylene resin powder, nylon resin powder, polyethylene resin powder, (meth)acrylic resin powder, and glass particle powder, which are not included in the component (D). These filling agents may be used singly or in combination of two or more as a mixture. From the viewpoint of further improving the fixing strength when the precoated bolt is screwed into the base material, the filling agent is preferably diatomaceous earth, mica, or polytetrafluoroethylene resin powder, and more preferably diatomaceous earth or polytetrafluoroethylene resin powder. In an embodiment of the present invention, the shape of the filling agent may be in a regular form such as spherical, plate-like, or needle-like form, or may be in an irregular form. In the case where a spherical filling agent is used, the average particle diameter (D50) is preferably 0.1 to 120 µm, more preferably 0.1 to 100 µm, and still more preferably 0.1 to 80 µm, and particularly preferably 0.1 to 30 µm. The average particle diameter (D50) is measured by the laser diffraction scattering method.

The content of the filling agent in the composition is preferably 0.1 to 200 parts by mass, more preferably 1 to 100 parts by mass, and still more preferably 5 to 80 parts by mass, relative to 100 parts by mass of the component (A). With a content of the filling agent in the range, it becomes easier to form a closest-packed structure with the microcapsules when making a screwing member, and a good appearance can be kept. With a content of the filler in the range, the generation of crumbs when a precoated bolt is screwed into a base material can be more suppressed. In the case of using two or more types of filling agents, the content means the total amount thereof.

Preferred examples of the rust inhibitor include sodium benzoate, benzotriazole, a chromate (e.g. zinc chromate, calcium chromate, strontium chromate, barium chromate, potassium zinc chromate, tetrabasic zinc chromate, etc.), a phosphate (e.g. zinc phosphate, zinc phosphorus silicate, aluminum zinc phosphate, calcium zinc phosphate, calcium phosphate, aluminum pyrophosphate, calcium pyrophosphate, aluminum dihydrogen tripolyphosphate, aluminum metaphosphate, calcium metaphosphate, zinc phosphomolybdate, aluminum phosphomolybdate, etc.), a nitrite (e.g. sodium nitrite, calcium nitrite, strontium nitrite, barium nitrite, ammonium nitrite, etc.), a phytate (e.g. zinc phytate, sodium phytate, potassium phytate, calcium phytate, etc.), a tannate (e.g. sodium tannate, potassium tannate, etc.), a polyamine compound (e.g. N-(2-hydroxyethyl) ethylenediaminetriacetic acid (HEDTA), ethylenediaminetetraacetic acid (EDTA), diethylenetriaminepentaacetic acid (DTPA), propylenediaminetetraacetic acid (PDTA), iminodiacetic acid, nitrilotriacetic acid (NTA), diethylenetriamine pentamethylenephosphonic acid (DTPMP), and alkali metal salts thereof); an intercalation compound including a monoalkylamine, a polyamine or a quaternary ammonium ion intercalated with a layered phosphate such as aluminum dihydrogen tripolyphosphate; MIO, lead cyanamide, ammonium metavanadate, ammonium zircofluoride, zinc molybdate, aluminum molybdate, barium metaborate, and a zinc salt of an organic nitro compound.

The content of the rust preventive in the composition is preferably 0.01 to 10 mass%, more preferably 0.1 to 8 mass%, still more preferably 0.1 to 5 mass%, and particularly preferably 0.1 to 3 mass%, relative to the total mass of the microcapsule-type curable resin composition (including optional components). In the case of using 2 or more types of rust preventives, the content means the total amount thereof.

Examples of the antifoaming agent include a silicone antifoaming agent (a silicone-based surfactant), a modified silicone-based antifoaming agent, an acetylene alcohol-based surfactant, a silica-based antifoaming agent, a wax, a polyether-modified polydimethylsiloxane, a paraffin-based oil, and a defoaming aliphatic derivative.

The content of the antifoaming agent in the composition is preferably 0.01 to 5 mass%, more preferably 0.05 to 3 mass%, and still more preferably 0.1 to 2 mass%, relative to the total mass of the microcapsule-type curable resin composition (including optional components). In the case of using two or more types of antifoaming agents, the content means the total amount thereof.

Examples of the pigment include an organic pigment and an inorganic pigment. Examples of the organic pigment include isoindolinone, isoindoline, azomethine, perylene, anthraquinone, dioxazine and phthalocyanine. Examples of the inorganic pigment include carbon black, ultramarine blue, Prussian blue, iron oxide red, titanium dioxide and lithopone. Alternatively, the pigment may be surface-treated to have self-dispersibility in an aqueous medium.

The content of the pigment in the composition is preferably 0.01 to 5 mass%, preferably 0.05 to 3 mass%, and more preferably 0.1 to 2 mass%, relative to the total mass of the microcapsule-type curable resin composition (including optional components). In the case of using two or more types of pigments, the content means the total amount thereof.

In some embodiments of the present invention, water or a solvent can be added as a dissolution medium. Examples of the water include pure water and ion-exchanged water, and examples of the solvent include an alcohol and other organic solvents. It is preferable that none other than water be included from concerns about the environment, cost, and the like. The content of the dissolution medium is preferably 10 to 60 mass%, more preferably 15 to 55 mass%, and still more preferably 20 to 50 mass%, relative to the total mass of the microcapsule-type curable resin composition (including optional components).

A method for producing the microcapsule-type curable resin composition of the present invention including blending each of the components described above is not particularly limited, and known methods may be used. For example, the component (D) and other components such as a filling agent, a pigment, a plasticizer, a dispersant and an antifoaming agent are added to ion-exchanged water and stirred. Subsequently, the component (B) is added thereto, and while continuous stirring, the components (A) and (C) are added thereto. The mixture is stirred to uniformity such that the microcapsules are not destroyed. The microcapsule-type curable resin composition of the present invention can be thus produced.

The present invention provides a method for producing a screwing member, including applying a microcapsule-type curable resin composition to a surface of a screwed portion of a screwing member, and drying the composition to form a precoated adhesive layer. The coating method and drying method are not particularly limited. Examples of the coating method include a coating method (dip coating) including fixing a screwed member with a hand or a magnet and dipping the screwing member in a liquid of the microcapsule-type curable resin composition. Examples of drying method include drying with a hot air dryer. The drying temperature is not particularly limited as long as volatile matter such as water volatilizes to achieve drying, and for example, a temperature range of 25 to 120°C is preferred, and a temperature range of 50 to 100°C is more preferred.

The present invention also provides a screwing member coated with a microcapsule-type curable resin composition. In an embodiment of the present invention, examples of the screwing member include a screw joint having a screwed portion such as a nipple, a socket, a tapered plug and an elbow, and the inner circumference of a nut, in addition to the screws described above, though not limited thereto. Examples of the material of the screwing member include iron, aluminum, gold, stainless steel, and SUS, which may be subjected to plating treatment such as zinc plating chromate treatment, or may be coated with a rust preventive.

### EXAMPLES

Hereinafter, the embodiment of the present invention will be described in more detail with reference to Examples, though the present invention is not limited thereto only. In the following Examples and Comparative Examples, unless otherwise specified, operations were performed at room temperature (25°C/relative humidity: 40 to 50% RH). Hereinafter, the microcapsule-type curable resin composition is also simply referred to as a composition.

### <Preparation of microcapsules encapsulating component (A)>

Microcapsules encapsulating the component (A) of the present invention were prepared as follows. To 625.6 g of ion-exchanged water, 100 g of an isobutylene-maleic anhydride copolymer (manufactured by Kuraray Co., Ltd., Isobam (registered trademark) 04) and 10.4 g of sodium hydroxide were added, and the mixture was stirred at 110°C for 4 hours in a pressurized vessel, so that an aqueous solution with a pH of 2.9 was obtained. Subsequently, after addition of 100 g of the aqueous solution to 270 g of ion-exchanged water, 184.8 g of component (A) (jER (registered trademark) 807 manufactured by Mitsubishi Chemical Corporation) was added thereto, and the mixture was stirred at room temperature (25°C), so that an aqueous dispersion was prepared. Subsequently, 110 g of ion-exchanged water and 32.1 g of a methylol melamine initial polymer (Sumilase Resin (registered trademark) 615 manufactured by Sumitomo Chemical Co., Ltd.) as a microcapsule wall material were added to the aqueous dispersion. The mixture was heated to a 90°C and polycondensed for 2 to 3 hours while stirring to obtain a slurry of microcapsules. Subsequently, the microcapsule slurry was dehydrated with a centrifugal dehydrator and dried to obtain an aggregate of microcapsules. The resulting microcapsules had an average particle diameter of 50 µm. The resulting microcapsules had a mass ratio between the component (A) and the microcapsule wall material of 80:20.

### <Preparation of microcapsules encapsulating component (C)>

Microcapsules encapsulating the component (C) of the present invention were prepared as follows. To 30 g of ion-exchanged water, 12 g of an isobutylene-maleic anhydride copolymer (manufactured by Kuraray Co., Ltd., Isobam (registered trademark) 110) was added. While stirring in a pressurized container, the mixture was heated to 40°C, and an aqueous tartaric acid solution with a concentration of 10 mass% was added dropwise thereto to adjust the pH to a range of 3.0 to 4.0. Subsequently, 125 g of pentaerythritol tetrakis-3-mercaptopropanoate (jER Cure (registered trademark) QX40 manufactured by Mitsubishi Chemical Corporation) as the component (C) was added to the aqueous solution, and the mixture was stirred at room temperature (25°C), so that an aqueous dispersion was prepared. On this occasion, by appropriately adjusting the stirring time and stirring speed, microcapsules having the following predetermined particle diameter were obtained. Subsequently, 200 g of water was added to the aqueous dispersion, and the mixture was heated to 50 to 70°C while stirring. Then, 50 g of an aqueous solution obtained by diluting the methylol melamine initial condensate described above as a microcapsule wall material (including 25 g of the methylol melamine initial condensate) with ion-exchanged water was added to the aqueous dispersion and stirred. Then, the temperature was raised to 90°C and polycondensation reaction was performed while stirring. After 2 to 3 hours, a 28 mass% aqueous ammonia solution was added thereto to neutralize the solution, so that the reaction was terminated and a slurry of microcapsules was obtained. Subsequently, the microcapsule slurry was dehydrated with a centrifugal dehydrator and dried to obtain an aggregate of microcapsules. The resulting microcapsules had an average particle diameter of 55 µm. The resulting microcapsules had a mass ratio between the component (C) and the microcapsule wall material of 85:15.

Components for use in Examples and Comparative Examples were as follows:
Microcapsules encapsulating component (A)
   · Component (A): epoxy resin (bisphenol F-type epoxy resin (jER (registered trademark) 807 manufactured by Mitsubishi Chemical Corporation))
   · Microcapsule wall material (melamine resin)
Component (B): water-dispersible binder
   · Acrylate copolymer (New Coat KSB-1, manufactured by Shin-Nakamura Chemical Co., Ltd., solid content: 45 mass%)
Microcapsules encapsulating component (C)
   · Component (C): curing agent for epoxy resin (pentaerythritol tetrakis-3-mercaptopropanoate (jER Cure (registered trademark) QX40, manufactured by Mitsubishi Chemical Corporation))
   · Microcapsule wall material (melamine resin)
Component (D): hollow filler
   · Soda lime borosilicate glass hollow filler (3M Glass Bubbles S38, manufactured by 3M Japan Ltd., average particle diameter: 40 µm, without silane coupling agent treatment)
   · Soda lime borosilicate glass hollow filler (3M Glass Bubbles iM30K, manufactured by 3M Japan Ltd., average particle diameter: 16 µm, without silane coupling agent treatment)
   · Acrylic-based copolymer hollow filler (EMC-40(B), manufactured by Nippon Fillite Co., Ltd., average particle diameter: 53 µm, without silane coupling agent treatment) Component (E): curing accelerator
   · 2,4,6-tris(dimethylaminomethyl)phenol (Ancamine (registered trademark) K54, manufactured by Air Products Japan Ltd.)

### Optional components

- Ion-exchanged water
- Diatomaceous earth (manufactured by SNOW FLOSS Celite, irregular shape)
- Polyethylene powder (Flo-Thene UF-20S, manufactured by Sumitomo Seika Chemicals Co., Ltd., average particle diameter: 20 µm)

### <Preparation of microcapsule-type curable resin composition>

The composition of the present invention was produced as follows. Each of the components was blended according to the blending amount shown in the following Table 1 and appropriately stirred and mixed with a stirring apparatus, so that the compositions in Examples and Comparative Examples were prepared. The numerical values of the respective components in Table 1 below are represented in parts by mass. Components other than the components (A), (B), and (C) were added to ion-exchanged water and stirred for 30 minutes at ambient temperature until uniformity. While stirring the mixture, component (B) was further added, then components (A) and (C) were added, and the mixture was stirred for 30 minutes at ambient temperature until uniformity, so that a composition was prepared.

The constitutions of the compositions of Examples and Comparative Examples are shown in the following Table 1. A blank in the following Table 1 indicates that the component is not included.

**[Table 1]**

| | | Example 1 | Example 2 | Example 3 | Example 4 | Example 5 | Example 6 | Example 7 | Comparative Example 1 |
|---|---|---|---|---|---|---|---|---|---|
| Microcapsules encapsulating component (A) | Component (A): jER807 | 100 | 100 | 100 | 100 | 100 | 100 | 100 | 100 |
| | Microcapsule wall material | 25 | 25 | 25 | 25 | 25 | 25 | 25 | 25 |
| Component (B) | New Coat KSB-1 (solid content) | 17 | 17 | 17 | 17 | 17 | 17 | 17 | 17 |
| Microcapsules encapsulating component (C) | Component (C): jER Cure QX40 | 50 | 50 | 50 | 50 | 50 | 50 | 50 | 50 |
| | Microcapsule wall material | 8.8 | 8.8 | 8.8 | 8.8 | 8.8 | 8.8 | 8.8 | 8.8 |
| Component (D) | 3M Glass Bubbles S38 | 2.6 | 7.7 | 12.9 | | | | | |
| | 3M Glass Bubbles iM30k | | | | 2.6 | 7.7 | | | |
| | EMC-40 (B) | | | | | | 2.6 | 7.7 | |
| Component (E) | Ancamine K54 | 5.5 | 5.5 | 5.5 | 5.5 | 5.5 | 5.5 | 5.5 | 5.5 |
| Optional component | Ion exchanged water | 170 | 170 | 170 | 170 | 170 | 170 | 170 | 170 |
| | New Coat KSB-1 (water) | 21 | 21 | 21 | 21 | 21 | 21 | 21 | 21 |
| | SNOW FLOSS | 43 | 43 | 43 | 43 | 43 | 43 | 43 | 43 |
| | Flo-Thene UF-20S | 9 | 9 | 9 | 9 | 9 | 9 | 9 | 9 |
| Total | | 451,9 | 457.0 | 462.2 | 451.9 | 457.0 | 451.9 | 457.0 | 449.3 |
| Total mass of solid content of composition | | 260.9 | 266.0 | 271.2 | 260.9 | 266.0 | 260.9 | 266.0 | 258.3 |
| Content of component (D) relative to total solid content of composition | | 1 mass% | 3 mass% | 5 mass% | 1 mass% | 3 mass% | 1 mass% | 3 mass% | 0 mass% |
| Content of water relative to total composition | | 39 mass% | 38 mass% | 38 mass% | 39 mass% | 38 mass% | 39 mass% | 38 mass% | 39 mass% |

### <Production of precoated bolt>

The microcapsule-type curable resin composition thus prepared was adjusted to a viscosity of 100 mPa·s with deionized water to prepare a processing liquid. More specifically, each composition (each microcapsule-type curable resin composition) was uniformly stirred with a stirrer for 10 minutes, and then subjected to viscosity measurement according to the method specified in JIS K 7117-2: 1999 (BL type viscometer, 60 rpm, rotor No. 2, 25°C, 55% RH). An operation of adding an appropriate amount of ion-exchanged water as a diluent and uniformly stirring the microcapsule-type curable resin composition for 10 minutes with a stirrer to perform the viscosity measurement was repeated until the viscosity of the microcapsule-type curable resin composition reached 100 mPa·s, so that a processing liquid was prepared. Separately, a bolt (hexagonal bolt, bolt size: M10 (diameter) by 1.5 mm (pitch) by 20 mm (length)) subjected to zinc plating chromate treatment was prepared. While pinching the hexagonal part of the bolt with a hand, or fixing the bolt with a magnet for dip coating, the bolt was lowered in the direction perpendicular to the surface of the processing liquid, so that the processing liquid was applied to 80 to 90% of the screwed portion (dip application). After a few seconds, the bolt was taken out from the liquid surface, and the sealant on the screw tip was wiped off with a waste cloth with the tip of the screw facing downward. Within 20 minutes, the tip of the screw facing downward without contact was heated and dried at 80°C for 20 minutes using a hot air dryer. A precoated bolt was thus produced.

The precoated bolt coated with the composition of each of Examples and Comparative Examples was subjected to the following measurements of the amount of crumbs and fixing strength, and the results are summarized in Table 2.

### <Measurement of crumb>

The precoated bolt thus produced was passed through two washers and a nut, and then tightened. The tightening was stopped just before application of torque. The crumbs sandwiched between the nut and the washer were excluded, and the crumbs of the resin generated during tightening were collected with tweezers and the total mass thereof was measured. Measurement was performed at n=4 to determine an average value. As the nut for use in the test, one fit to the hexagonal bolt and similarly subjected to zinc plating chromate treatment (manufactured by Tanahara Neji Seisakusho K.K.) was used. The evaluation result is preferably less than 200 mg, though not particularly limited.

### <Measurement of fixing strength (breaking torque)>

A nut was tightened with a tightening torque of 30.0 N·m to the precoated bolt produced by the method described above. Then, the bolt was stored under atmospheric pressure and under an environment of a temperature of 25±1°C for 24 hours to cure the composition for use as a sample for measuring adhesion strength. The precoated bolt was then subjected to measurement of the breaking torque. The breaking torque was measured as a torque (maximum torque) at the start of movement when the nut was turned in the opposite direction to the tightening direction with the bolt fixed. The evaluation result is preferably 50 N·m or more from the viewpoint of the anti-loosening effect, though not particularly limited.

### <Measurement of fixing strength (residual torque)>

A nut was tightened with a tightening torque of 30.0 N·m to the precoated bolt produced by the method described above. Then, the bolt was stored under atmospheric pressure and under an environment of a temperature of 25±1°C for 24 hours to cure the composition for use as a sample for measuring adhesion strength. The precoated bolt was then subjected to measurement of the residual torque. The residual torque was measured as a torque (maximum torque) when the nut made a 1/4 turn in the opposite direction to the tightening direction with the bolt fixed. The evaluation result is preferably 8 N·m or more from the viewpoint of the anti-loosening effect, though not particularly limited.

**[Table 2]**

| | Example 1 | Example 2 | Example 3 | Example 4 | Example 5 | Example 6 | Example 7 | Compara tive Example 1 |
|---|---|---|---|---|---|---|---|---|
| Amount of crumbs (mg) | 130 | 80 | 160 | 140 | 100 | 110 | 160 | 200 |
| Measurement of fixing strength (breaking torque) (N·m) | 65 | 66 | 66 | 66 | 65 | 64 | 64 | 65 |
| Measurement of fixing strength (residual torque) (N·m) | 9 | 9 | 11 | 8 | 9 | 8 | 9 | 7 |

In Examples 1 to 7, the amounts of components added other than the component (D) were fixed, and the composition, particle diameter, and amount of the component (D) added were varied. In Comparative Example 1, the component (D) was not contained. From the results in Table 2 described above, in Examples 1 to 7 with component (D) contained, generation of crumbs was less than that in Comparative Example 1 with component (D) not contained, regardless of the composition, particle diameter, or amount of the component (D) added. It is presumed that since the hollow filler of the component (D) has a space inside, the hollow filler is destroyed when the screwing member is screwed into the base material, and solid contents enter the internal space to reduce generation of crumbs. In addition, regarding the fixing strength, it has been found that the breaking torque was not reduced by the addition of the component (D), and the residual torque was better in Examples 1 to 7 than in Comparative Example 1 with the component (D) not contained. It is presumed that the high fixing strength was obtained because the hollow filler destroyed during screwing promotes the engagement between the screwing member and the base material. From these results, it has been found that the microcapsule-type curable resin composition of the present invention is capable of reducing the generation of crumbs when screwed into a base material, and has excellent anti-loosening effect.

### Industrial Applicability

The microcapsule-type curable resin composition of the present invention is capable of reducing the generation of crumbs when applied to an adherend such as a screwing member and tightened, and has excellent fixing strength, so that application to sliding parts of electronic components, precision parts, etc. is expected.

The present application is based on Japanese Patent Application No. 2021-187226 filed on November 17, 2021, the disclosure of which is incorporated herein by reference in its entirety.

## Claims

1. A microcapsule-type curable resin composition comprising the following components (A) to (D):
Component (A): an epoxy resin
Component (B): a water-dispersible binder
Component (C): a curing agent for an epoxy resin
Component (D): a hollow filler.

2. The microcapsule-type curable resin composition according to claim 1, wherein the composition comprises at least one thiol compound as the component (C).

3. The microcapsule-type curable resin composition according to claim 1, wherein the component (A) and the component (C) are encapsulated in microcapsules different from each other.

4. The microcapsule-type curable resin composition according to claim 1, further comprising a curing accelerator as component (E).

5. The microcapsule-type curable resin composition according to claim 4, wherein the component (E) is a tertiary amine compound.

6. The microcapsule-type curable resin composition according to claim 1, wherein the component (D) is not treated with a silane coupling agent.

7. The microcapsule-type curable resin composition according to claim 1, wherein the component (B) is a polymer containing a (meth)acrylate as a constituent monomer.

8. The microcapsule-type curable resin composition according to claim 1, containing no dissolution medium other than water.

9. A method for producing a screwing member, comprising applying the microcapsule-type curable resin composition according to any one of claims 1 to 8 to a surface of a screwed portion of a screwing member, and drying the composition to form an adhesive layer.

10. A screwing member produced by the production method according to claim 9.
